# EUROPÄISCHE PATENTANMELDUNG

(11) **EP 4 282 835 A1**
(43) Veröffentlichungstag der Anmeldung: **29.11.2023**
(21) Anmeldenummer: 22174893.2
(22) Anmeldetag: 23.05.2022
(51) Int. Cl.: C02F 11/13, C02F 11/125, C02F 103/00

(54) **VERFAHREN ZUR VERARBEITUNG VON PHOSPHATHALTIGEM ROHSTOFF**

(71) Anmelder: Grimm, Bernhard, 97753 Karlstadt (DE)
(72) Erfinder: Grimm, Bernhard, 97753 Karlstadt (DE)
(74) Vertreter: advotec.

(57) **Zusammenfassung**

Es wird ein Verfahren (200) zur Verarbeitung von phosphathaltigem Rohstoff (131) beschrieben. Das Verfahren (200) umfasst das Zuführen (201) von phosphathaltigem Rohstoff (131) und Reaktionsmittel zu einer Reaktionskammer (101) eines Reaktors (100), sodass in der Reaktionskammer (101) ein Gemisch aus phosphathaltigem Rohstoff (131) und Reaktionsmittel gebildet wird, sowie das Transportieren (202) des Gemisches aus phosphathaltigem Rohstoff (131) und Reaktionsmittel anhand einer Reihe von Förderelementen (102) entlang einer Reaktionsstrecke innerhalb der Reaktionskammer (101) zu einem Austrag (108) der Reaktionskammer (101). Außerdem umfasst das Verfahren (200) das Bewirken (203), im Rahmen des Transports entlang der Reaktionsstrecke, einer Trocknung und einer Aufschlussreaktion des Gemisches aus phosphathaltigem Rohstoff (131) und Reaktionsmittel, um den phosphathaltigen Rohstoff (131) in Düngemittel (133) umzuwandeln, sowie das Bereitstellen (204) des Düngemittels (131) an dem Austrag (108) der Reaktionskammer (101).

## Beschreibung

Die Erfindung betrifft ein Verfahren zur Verarbeitung von phosphathaltigem Rohstoff (etwa von Klärschlamm), insbesondere zur Erzeugung von Düngemittel.

Klärschlamm kann getrocknet, verbrannt und separat nachverarbeitet werden, um aus dem Klärschlamm bzw. aus der Klärschlammasche Düngemittel zu erzeugen. Diese mehrstufige Verarbeitung von Klärschlamm ist mit einem relativ hohen Aufwand und mit einer relativ hohen Umweltbelastung verbunden.

Das vorliegende Dokument befasst sich mit der technischen Aufgabe, eine besonders effiziente und umweltfreundliche Verarbeitung von Klärschlamm zur Herstellung von Düngemittel bereitzustellen. Dabei soll es insbesondere ermöglicht werden, vorbereitende Stufen, wie z.B. Trocknung, Pelletieren, etc., zu vermeiden. Die Aufgabe wird durch den unabhängigen Anspruch gelöst. Bevorzugte Ausgestaltungen sind in den abhängigen Ansprüchen beschrieben.

Gemäß einem Aspekt wird ein Verfahren zur Verarbeitung von phosphathaltigem Rohstoff, etwa von Klärschlamm (insbesondere von Haushalts-Klärschlamm), beschrieben. Es sei angemerkt, dass der Klärschlamm Klärschlammasche umfassen, insbesondere sein, kann. Alternativ kann der Klärschlamm unverarbeiteter (insbesondere unverbrannter) und/oder feuchter Klärschlamm sein. Das Verfahren kann in einem einzigen Reaktor ausgeführt werden.

Das Verfahren wird im Folgenden für die Verarbeitung von Klärschlamm beschrieben. Es sei angemerkt, dass die beschriebenen Aspekte allgemein für die Verarbeitung eines phosphathaltigen Rohstoffs anwendbar sind. Beispielhafte phosphathaltige Rohstoffe (neben Klärschlamm) sind organische Rohstoffe, wie z.B. Knochenmehl oder Rückstände aus einer Tierkörperbeseitigungsanstalt, oder mineralische Rohstoffe, wie z.B. Rohphosphat.

Das Verfahren umfasst das Zuführen von Klärschlamm und Reaktionsmittel zu der Reaktionskammer eines Reaktors, sodass in der Reaktionskammer ein Gemisch aus Klärschlamm und Reaktionsmittel gebildet wird. Das Reaktionsmittel kann zumindest ein Salz, insbesondere ein Natriumsatz, Natriumcarbonat, Natriumhydrogencarbonat, Trona und/oder Carbonatit-Lava umfassen.

Der Klärschlamm oder das Gemisch aus Klärschlamm und Reaktionsmittel können dem Reaktionsraum des Reaktors über zumindest einen Zuteiler, insbesondere über zumindest einen Mehrfachklappenbeschicker, zugeführt werden. Dabei kann der Klärschlamm ggf. bereits außerhalb der Reaktionskammer mit dem Reaktionsmittel vermischt werden. So kann in besonders zuverlässiger Weise ein Gemisch aus Klärschlamm und Reaktionsmittel erzeugt werden.

Alternativ oder ergänzend kann Reaktionsmittel separat von dem Klärschlamm in den Reaktionsraum des Reaktors geführt werden. So kann das Verfahren zur Verarbeitung von Klärschlamm weiter vereinfacht werden.

Das Verfahren umfasst ferner das Transportieren des Gemisches aus Klärschlamm und Reaktionsmittel anhand einer Reihe von Förderelementen, insbesondere Drehmitnehmern, entlang einer Reaktionsstrecke innerhalb der Reaktionskammer zu einem Austrag der Reaktionskammer. Das Gemisch aus Klärschlamm und Reaktionsmittel kann dabei anhand der Reihe von Förderelementen von dem Zuteiler entlang der Reaktionsstrecke innerhalb der Reaktionskammer zu dem Austrag der Reaktionskammer transportiert werden. Die Reihe von Förderelementen kann zu diesem Zweck zumindest einen ersten Drehmitnehmer und einen entlang der Reaktionstrecke darauffolgenden zweiten Drehmitnehmer umfassen. Bevorzugt sind zumindest drei Drehmitnehmer hintereinander entlang der Reaktionstrecke angeordnet.

Des Weiteren umfasst das Verfahren das Bewirken, im Rahmen des Transports entlang der Reaktionsstrecke, einer Trocknung und einer Aufschlussreaktion des Gemisches aus Klärschlamm und Reaktionsmittel, um den Klärschlamm in Düngemittel umzuwandeln. Die Trocknung des Klärschlamms kann dabei in einem ersten Abschnitt der Reaktionsstrecke bewirkt werden (die dem Zuteiler zugewandt ist). Ferner kann die Aufschlussreaktion des Klärschlamms in einem nachfolgenden zweiten Abschnitt der Reaktionsstrecke bewirkt werden (die dem zweiten Abschnitt der Reaktionsstrecke zugewandt ist).

Das Verfahren umfasst außerdem das Bereitstellen des Düngemittels an dem Austrag der Reaktionskammer. Dabei kann das Düngemittel an dem Austrag der Reaktionskammer gekühlt werden, insbesondere mittels eines Wärmetauschers. Die dabei aufgenommene thermische Energie kann ggf. im Reaktor für die Trocknung und/oder für die Aufschlussreaktion verwendet werden, um die Energieeffizienz des Verfahrens weiter zu erhöhen.

In diesem Dokument wird somit ein Verfahren beschrieben, das es ermöglicht, Klärschlamm (und/oder Klärschlammasche) in integrierter und/oder durchgängiger Weise innerhalb eines einzigen Reaktors in Düngemittel umzuwandeln. So kann eine besonders umweltfreundliche und effiziente Verarbeitung von Klärschlamm ermöglicht werden.

Das Verfahren kann ferner das Aufheizen des Gemisches aus Klärschlamm und Reaktionsmittel auf eine Temperatur zwischen 800°C und 1000°C umfassen, insbesondere um die Trocknung und/oder die Aufschlussreaktion des Klärschlamms zu bewirken. In einem derartigen Temperaturbereich kann eine besonders zuverlässige Umwandlung von Klärschlamm in (phosphorbasiertes) Düngemittel ermöglicht werden.

Im Rahmen des Verfahrens kann thermische Energie, die bei der Aufschlussreaktion entsteht, zur Trocknung des Gemisches aus Klärschlamm und Reaktionsmittel verwendet werden. Zu diesem Zweck kann die thermische

Energie aus dem zweiten Abschnitt der Reaktionsstrecke in den ersten Abschnitt der Reaktionsstrecke transferiert werden (z.B. mithilfe eines Gebläses). Zu diesem Zweck kann ein Wärmeverschiebesystem verwendet werden, um Wärme aus dem zweiten Abschnitt in den ersten Abschnitt zu verschieben. So kann eine besonders energieeffiziente Umwandlung von Klärschlamm in Düngemittel bewirkt werden.

Im Rahmen des Verfahrens kann der Reaktionskammer thermische Energie auf Basis von Primärenergie, elektrischer Energie und/oder Biomasse zugeführt werden. Dabei hat ein elektrisch beheizter Reaktor die Vorteile, dass eine Verflüchtigung von in dem Inputmaterial (d.h. in dem Klärschlamm und/oder in dem Reaktionsmittel) enthaltener Schwermetalle durch Mangel an Sauerstoff bewirkt werden kann, dass die Staubemission durch relativ kleine Rauchgasmengen reduziert werden kann (im Vergleich zu einem Brennerbetrieb) und/oder dass die Größe der Abgasreinigungsanlage reduziert werden kann. Die thermische Energie kann für die Trocknung und/oder für die Aufschlussreaktion des Klärschlamms verwendet werden. So kann eine besonders zuverlässige Umwandlung von Klärschlamm in Düngemittel bewirkt werden.

Im Rahmen des Verfahrens kann ein Vermischen des Klärschlamms und des Reaktionsmittels anhand der Reihe von Förderelementen, insbesondere Drehmitnehmern, bewirkt werden. So kann die Zuverlässigkeit der Umwandlung von Klärschlamm in Düngemittel weiter erhöht werden.

Das Verfahren kann umfassen, das Steuern des ersten Drehmitnehmers und des zweiten Drehmitnehmers, insbesondere in Bezug auf die Drehgeschwindigkeit und/oder in Bezug auf die Drehrichtung des jeweiligen Drehmitnehmers, zumindest teilweise unterschiedlich und/oder unabhängig voneinander. Mit anderen Worten, die einzelnen Drehmitnehmer in den unterschiedlichen Abschnitten der Reaktionsstrecke können zumindest teilweise unabhängig und/oder unterschiedlich voneinander betrieben werden.

Insbesondere können die einzelnen Drehmitnehmer (in einer Mitnehmerreihe) unabhängig voneinander reversierbar sein (d.h. mit unterschiedlichen Drehrichtungen betrieben werden). So kann ein innerer Kreislauf der Reaktionspartner ermöglicht werden. Dies bewirkt eine erhöhte Mischgüte, eine Homogenisierung der Reaktionstemperatur und/oder eine Erhöhung des Umsatzes an Klärschlamm.

Im Rahmen des Verfahrens kann somit bewirkt werden, dass zumindest zwei Drehmitnehmer mit entgegengesetzter Drehrichtung betrieben werden, sodass zwischen den zwei Drehmitnehmern ein innerer Kreislauf der Reaktionspartner in dem Reaktor bewirkt wird. So können die Güte und die Zuverlässigkeit der Umwandlung von Klärschlamm in Düngemittel weiter erhöht werden.

Im Rahmen des Verfahrens können ein oder mehrere Brenner in dem Reaktionsraum des Reaktors betrieben werden, um die Aufschlussreaktion des Gemisches aus Klärschlamm und Reaktionsmittel zu initiieren und/oder zu unterstützen. Durch das Verwenden von ein oder mehreren Brennern können die Güte und die Zuverlässigkeit der Umwandlung von Klärschlamm in Düngemittel weiter erhöht werden.

Das Verfahren kann umfassen, das Führen von Abluft aus der Reaktionskammer in eine Nachreaktionskammer des Reaktors, insbesondere über eine Öffnung in einer Trennwand zwischen der Reaktionskammer und der Nachreaktionskammer des Reaktors. Die Abluft kann dann in der Nachreaktionskammer mit Sauerstoff, insbesondere Luftsauerstoff, vermischt werden, um die Abluft zu oxidieren. Die oxidierte Abluft kann dann als Abgas aus dem Reaktor geleitet werden. Durch die Nachverarbeitung der Abluft (insbesondere durch die die Abscheidung von Stickstoffoxiden aus der Abluft) können die Energieeffizienz und die Umweltverträglichkeit der Verarbeitung von Klärschlamm weiter erhöht werden. Insbesondere kann die erforderliche Menge an Harnstoff reduziert werden oder es kann ggf. ganz auf die Verwendung von Harnstoff verzichtet werden.

Im Rahmen des Verfahrens kann mittels eines Wärmetauschers des Reaktors thermische Energie von der Abluft aus der Reaktionskammer, insbesondere von der oxidierten Abluft aus der Nachreaktionskammer, an einen Wärmeträger (z.B. Luft, Öl, Wasser oder Wasserdampf) übertragen werden. Die Trocknung und/oder die Aufschlussreaktion in der Reaktionskammer können dann zumindest teilweise anhand von der auf den Wärmeträger übertragenen thermischen Energie bewirkt werden. So kann die Energieeffizienz der Verarbeitung des Klärschlamms weiter erhöht werden.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Des Weiteren können jegliche Aspekte der in diesem Dokument beschriebenen Verfahren, Vorrichtung und Systemen in vielfältiger Weise miteinander kombiniert werden. Insbesondere können die Merkmale der Ansprüche in vielfältiger Weise miteinander kombiniert werden.

Im Weiteren wird die Erfindung anhand von Ausführungsbeispielen näher beschrieben. Dabei zeigt
Fig. 1 einen beispielhaften Reaktor mit einem gemeinsamen Trocknungs- und Reaktionsraum; und
Fig. 2 ein Ablaufdiagramm eines beispielhaften Verfahrens zur Verarbeitung von Klärschlamm.

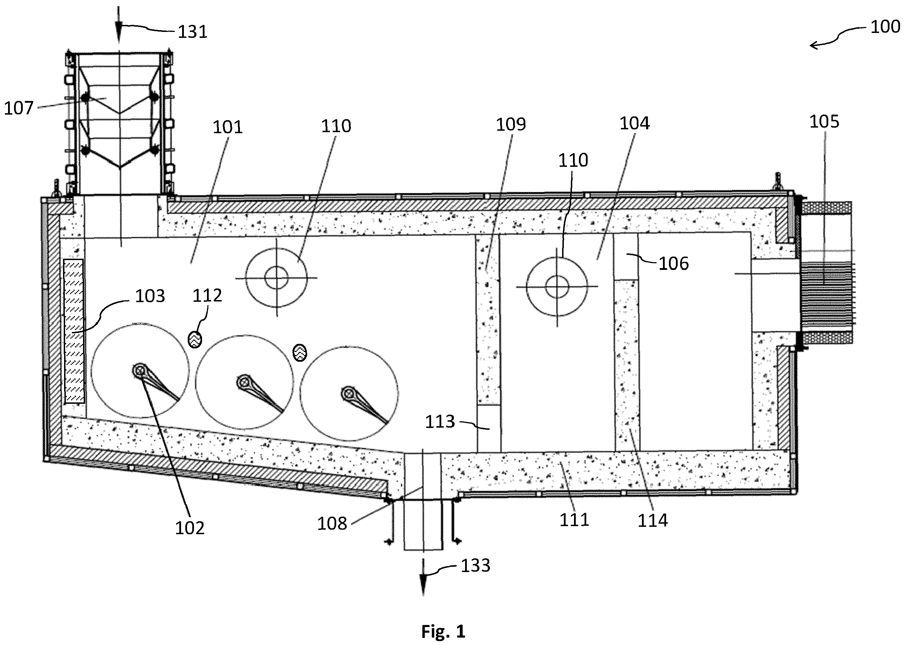

Wie eingangs dargelegt, befasst sich das vorliegende Dokument mit der effizienten und zuverlässigen Verarbeitung von Klärschlamm zu einem Düngemittel. In diesem Zusammenhang zeigt Fig. 1 einen beispielhaften Umwandlungsreaktor 100 mit einem gemeinsamen Trocknungs- und Reaktionsraum 101 (in diesem Dokument auch als Reaktionskammer bezeichnet). Über einen Zuteiler 107, insbesondere über einen Mehrfachklappenbeschicker, wird Klärschlamm 131 in die Reaktionskammer 101 geleitet. In der Reaktionskammer 101 sind Förderelemente, insbesondere Drehmitnehmer, 102 angeordnet, durch die der Klärschlamm 131 entlang einer Reaktionsstrecke zu einem Austrag 108 der Reaktionskammer 101 transportiert werden kann. Die Reaktionskammer 101 kann eine feuerfeste Auskleidung 111 aufweisen.

Entlang der Reaktionsstrecke kann der Klärschlamm 131 zunächst getrocknet werden. Zu diesem Zweck kann thermische Energie des bei der anschließenden Verbrennung und/oder Reaktion bewirkten Rauchgases verwendet werden. Alternativ oder ergänzend können an einer Wand, insbesondere an dem Boden und/oder an ein oder mehreren Seitenwänden, der Reaktionskammer 101 ein oder mehrere Heizelemente 103 angeordnet sein, die jeweils ausgebildet sind, den Klärschlamm 131 zu erwärmen und zu trocknen. Alternativ oder ergänzend kann über einen Eintritt 112 vorgeheizte Verbrennungs- und/oder Trocknungsluft in die Reaktionskammer 101 geleitet werden.

In einem zweiten Abschnitt der Reaktionsstrecke kann dann eine Verbrennung und/oder (Aufschluss-) Reaktion des (getrockneten) Klärschlamms 131 bewirkt werden. Zu diesem Zweck können ein oder mehrere Brenner 110 in der Reaktionskammer 101 angeordnet sein, insbesondere um die Verbrennung und/oder die Reaktion zu initiieren. An dem Austrag 108 kann dann ein Reaktionsprodukt 133 bereitgestellt werden. Das Reaktionsprodukt 133 kann dabei als Düngemittel verwendet werden.

Die bei der Trocknung- und/oder Reaktion entstehenden Gase können über eine Öffnung 113 in einer Trennwand 109 von der Reaktionskammer 101 in eine Nachreaktionskammer 104 geleitetet werden, in der eine weitere Verbrennung und/oder Reaktion der Gase bewirkt werden kann. Zu diesem Zweck kann die Nachreaktionskammer 104 ein oder mehrere Brenner 110 umfassen. Durch ein oder mehrere Öffnungen 106 in einer weiteren Trennwand 114 können Turbulenzen in der Nachreaktionskammer 104 bewirkt werden, um eine zuverlässige Verbrennung und/oder Reaktion der Gase zu bewirken. Ein Wärmetauscher 105 kann dazu verwendet werden, den weiter verbrannten Gasen, d.h. dem Abgas, thermische Energie zu entziehen.

Es kann somit mechanisch und/oder thermisch vorentwässerter Klärschlamm 131 mit einem Reaktionsmittel (etwa mit einem Salz, z.B. einem Natriumsalz) und gegebenenfalls mit Klärschlammasche vermischt werden. Die Mischung aus Klärschlamm 131 und Reaktionsmittel kann durch einen Mehrfachklappenbeschicker 107 in den Reaktor 100 gegeben werden. Der Mehrfachklappenbeschicker 107 stellt dabei sicher, dass Wärme aus der Reaktionskammer 101 nicht nach außen gelangt.

In dem Reaktor 100 kann eine Umwandlung von Klärschlammasche in Phosphordünger bewirkt werden. Die Energiezufuhr kann mittels Primärenergie und/oder Elektroenergie und/oder Biomasse erfolgen.

Die Vermischung und/oder die Zuführung des Reaktionsmittels kann vor der Beschickung in den Reaktor 100 durchgeführt werden. Alternativ kann das Reaktionsmittel an einer geeigneten Stelle in den Reaktor 100 zugeführt werden (ggf. separat von dem Klärschlamm 131).

Drehmitnehmer 102 (z.B. mindestens 3 Drehmitnehmer) können für einen guten Stoff- und Wärmeübergang und eventuell für eine weitere Vermischung der Komponenten (Klärschlamm 131 und Reaktionsmittel) sorgen.

Die Trocknungswärme kann über einen beheizten Doppelboden 111 (mit Heizelement 103) oder durch vorgeheizte Verbrennungsluft (über einen Eintritt 112) eingebracht werden. Alternativ oder ergänzend kann eine elektrische Beheizung 103 vorgesehen werden.

Die Trocknungs- und Verbrennungsluft kann seitlich in das zu behandelnde Gemisch aus Klärschlamm 131 und Reaktionsmittel eingebracht werden. Die thermische Energie des Gemisches kann dazu genutzt werden, das Gemisch auf eine Temperatur von 800 bis 1000 °C zu bringen. In diesem Temperaturbereich findet eine Aufschlussreaktion zu (pflanzenverfügbarem) Phosphordünger statt. Die notwendige Verweilzeit des Gemisches in dem Reaktor 100 kann durch Einzelansteuerung der Drehmitnehmer 102 eingestellt werden. Die einzelnen Drehmitnehmer 102 können zusätzlich als Mischelemente ausgeführt werden.

Der hergestellte Phosphordünger 133 kann mittels einer trockenen Entaschung abgeführt werden. Der Trockenentascher 108 kann mit einem Kühlsystem ausgerüstet sein, mit dem der Phosphordünger 133 abgekühlt wird.

Ein oder mehrere Brenner 110 können zum Anfahren des Reaktors 100 verwendet werden, oder für den Fall, dass die o.g. Solltemperatur nicht erreicht wird. Alternativ oder ergänzend kann mit einer elektrischen Beheizung (durch das Heizelement 103) angefahren werden.

Gegebenenfalls kann zu dem Gemisch aus Klärschlamm 131 und Reaktionsmittel Biomasse zugegeben werden, um die thermische Energie des Gemisches zu optimieren.

Die heiße Abluft aus dem Reaktionsraum 101 kann über eine Öffnung 113 in der Trennwand 109 in die Nachreaktionskammer 104 abgeführt werden. Dort kann die Abluft über eine oder mehrere Trennwände 114 mit Luftsauerstoff gemischt werden. Damit kann eine vollständige Oxidation der Abluft sichergestellt werden (wodurch die Umweltbelastungen reduziert werden).

In einem Wärmetauschersystem 105 kann die heiße Abluft heruntergekühlt werden. Dabei kann ein Wärmeträger (Luft oder Thermalöl oder Wasser oder Dampf) aufgeheizt werden. Der aufgeheizte Wärmeträger kann wiederum als Trocknungsenergieträger für den Reaktorraum 101 verwendet werden.

Es wird somit ein integriertes Trocknungs- und Behandlungsverfahren von Klärschlamm und/oder Klärschlammasche in einem Reaktor 100 beschrieben. In der Kammer 101 des Reaktors 100 können gleichzeitig die Verfahrensschritte Vermischung, Trocknung, Aufschlussreaktion, Austrag und/oder Kühlung ausgeführt werden.

Der Reaktor 100 ermöglicht eine Umwandlung von Klärschlamm und/oder Klärschlammasche in einen Phosphordünger. Dabei kann die thermische Energie des Klärschlammes für die Aufschlussreaktion genutzt werden. Gegebenenfalls kann zur Optimierung der thermischen Energie des Gemisches aus Klärschlamm und Reaktionsmittel noch heizwertreiche Biomasse wie z.B. Holzhackschnitzel, Gärrest usw., in die Kammer 101 des Reaktors 100 hinzugegeben werden.

Zur weiteren Verbesserung der CO2-Bilanz des Reaktors 100 kann ggf. mit elektrischer Energie beheizt werden.

Die Drehmitnehmer 103 verbessern den Wärme- und Stofftransport und ermöglichen durch die Einstellbarkeit der Verweilzeit die Aufschlussreaktionen. Die Drehmitnehmer 103 können auf einen optimalen Reaktionsverlauf angepasst werden. Die Drehmitnehmer 103 können z.B. einzeln vorwärts und rückwärts gesteuert bewegt werden. So können innere Kreisläufe realisiert werden. Beispielsweise kann so die optimale Reaktionszone abhängig vom Feuchtegehalt des Klärschlamms eingestellt werden. Es kann somit die optimale Reaktionszone innerhalb der Kammer 101 des Reaktors 100 über die Drehmitnehmer 103 eingestellt werden.

Durch das beschriebene Verfahren können auch andere phosphathaltige Rohstoffe, organischen (z.B. Knochenmehl, Rückstände aus einer Tierkörperbeseitigungsanstalt) oder mineralischen Ursprungs (z.B. Rohphosphat), verarbeitet werden.

Durch Nutzung der, bei der Schlammtrocknung entstehenden, ammoniakhaltigen Abluft in der DeNOx (d.h. bei der Abscheidung von Stickstoffoxiden (NOx)) kann Harnstofflösung ersetzt und eingespart werden.

Die zur Absorption eingesetzten alkalischen Chemikalien können, sofern sie Natriumsalze enthalten, als Aufschlussreagens im Reaktor wieder zur Anwendung kommen. Das Verfahren ist somit, zumindest bei zahlreichen Rohstoffen, abfallfrei.

Als Aufschlussreagens können neben Natriumcarbonat und Natriumhydrogencarbonat Natriumsalze organischer Säuren oder Mineralien wie Trona und Carbonatit-Lava verwendet werden. Ebenfalls möglich ist die Verwendung von Kaliumcarbonat, Kaliumhydrogencarbonat oder Kaliumsalze organischer Säuren.

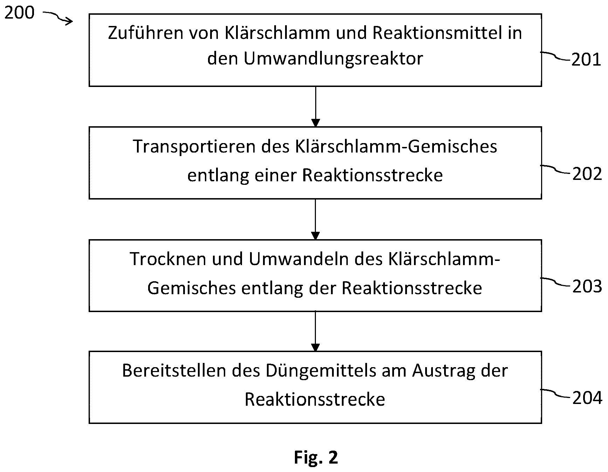

Fig. 2 zeigt ein Ablaufdiagramm eines beispielhaften Verfahrens 200 zur Verarbeitung von einem phosphathaltigen Rohstoff, wie z.B. Klärschlamm, 131. Das Verfahren 200 kann unter Verwendung des in diesem Dokument beschriebenen Reaktors 100 ausgeführt werden. Das Verfahren 200 umfasst das Zuführen 201 von phosphathaltigem Rohstoff, insbesondere von Klärschlamm, 131 und Reaktionsmittel zu der Reaktionskammer 101 des Reaktors 100, sodass in der Reaktionskammer 101 ein Gemisch aus phosphathaltigem Rohstoff, insbesondere Klärschlamm, 131 und Reaktionsmittel gebildet wird. Der phosphathaltige Rohstoff, insbesondere der Klärschlamm, 131 und/oder das Reaktionsmittel können der Reaktionskammer 101 über einen Zuteiler 107, insbesondere über einen Mehrfachklappenbeschicker, zugeführt werden.

Das Verfahren 200 umfasst ferner das Transportieren 202 des Gemisches aus phosphathaltigem Rohstoff, insbesondere aus Klärschlamm, 131 und Reaktionsmittel anhand einer Reihe von Drehmitnehmern 102 entlang einer Reaktionsstrecke innerhalb der Reaktionskammer 101 zu einem Austrag 108 der Reaktionskammer 101. Die Reaktionsstrecke kann sich von dem Zuteiler 107 bis zu dem Austrag 108 erstrecken. Die Drehmitnehmer 102 (z.B. 3 oder mehr Drehmitnehmer 102) können nacheinander entlang der Reaktionsstrecke angeordnet sein, um das Gemisch von dem Zuteiler 107 zu dem Austrag 108 zu transportieren.

Des Weiteren umfasst das Verfahren 200 das Bewirken 203, im Rahmen des Transports entlang der Reaktionsstrecke, der Trocknung und der Aufschlussreaktion des Gemisches aus phosphathaltigem Rohstoff, insbesondere aus Klärschlamm, 131 und Reaktionsmittel, um den phosphathaltigen Rohstoff, insbesondere den Klärschlamm, 131 in Düngemittel 133 umzuwandeln. Zu diesem Zweck kann dem Gemisch thermische Energie zugeführt werden (z.B. durch die Verbrennung von Biomasse, durch ein elektrisches Heizelement 103 und/oder durch die Verbrennung eines Primärenergieträgers).

Außerdem umfasst das Verfahren 200 das Bereitstellen 204 des (ggf. gekühlten) Düngemittels 131 an dem Austrag 108 der Reaktionskammer 101.

Die in dem vorliegenden Dokument beschriebenen Maßnahmen ermöglichen eine besonders effiziente und umweltfreundliche Verarbeitung von einem phosphathaltigen Rohstoff, insbesondere von Klärschlamm, zur Herstellung von Düngemittel.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Verfahren, Vorrichtungen und Systeme veranschaulichen sollen.

## Patentansprüche

1. Verfahren (200) zur Verarbeitung eines phosphathaltigen Rohstoffs, insbesondere von Klärschlamm, (131); wobei das Verfahren (200) umfasst,
- Zuführen (201) von phosphathaltigem Rohstoff (131) und Reaktionsmittel zu einer Reaktionskammer (101) eines Reaktors (100), sodass in der Reaktionskammer (101) ein Gemisch aus phosphathaltigem Rohstoff (131) und Reaktionsmittel gebildet wird;
- Transportieren (202) des Gemisches aus phosphathaltigem Rohstoff (131) und Reaktionsmittel anhand einer Reihe von Förderelementen (102) entlang einer Reaktionsstrecke innerhalb der Reaktionskammer (101) zu einem Austrag (108) der Reaktionskammer (101);
- Bewirken (203), im Rahmen des Transports entlang der Reaktionsstrecke, einer Trocknung und einer Aufschlussreaktion des Gemisches aus phosphathaltigem Rohstoff (131) und Reaktionsmittel, um den phosphathaltigen Rohstoff (131) in Düngemittel (133) umzuwandeln; und
- Bereitstellen (204) des Düngemittels (131) an dem Austrag (108) der Reaktionskammer (101).

2. Verfahren (200) gemäß Anspruch 1, wobei das Bewirken (203) der Trocknung und der Aufschlussreaktion umfasst, Aufheizen des Gemisches aus phosphathaltigem Rohstoff (131) und Reaktionsmittel auf eine Temperatur zwischen 800°C und 1000°C.

3. Verfahren (200) gemäß einem der vorhergehenden Ansprüche, wobei das Verfahren (200) umfasst, Nutzen von thermischer Energie, die bei der Aufschlussreaktion entsteht, zur Trocknung des Gemisches aus phosphathaltigem Rohstoff (131) und Reaktionsmittel.

4. Verfahren (200) gemäß einem der vorhergehenden Ansprüche, wobei das Bewirken (203) der Trocknung und der Aufschlussreaktion umfasst, Zuführen von thermischer Energie auf Basis von Primärenergie, elektrischer Energie und/oder Biomasse.

5. Verfahren (200) gemäß einem der vorhergehenden Ansprüche, wobei das Verfahren (200) umfasst,
- Führen einer Abluft aus der Reaktionskammer (101) in eine Nachreaktionskammer (104), insbesondere über eine Öffnung (113) in einer Trennwand (109) zwischen der Reaktionskammer (101) und der Nachreaktionskammer (104); und
- Vermischen der Abluft in der Nachreaktionskammer (104) mit Sauerstoff, insbesondere Luftsauerstoff, um die Abluft zu oxidieren.

6. Verfahren (200) gemäß einem der vorhergehenden Ansprüche, wobei das Verfahren (200) umfasst, Übertragen von thermischer Energie von Abluft aus der Reaktionskammer (101), insbesondere von oxidierter Abluft, an einen Wärmeträger mittels eines Wärmetauschers (105) des Reaktors (100).

7. Verfahren (200) gemäß Anspruch 6, wobei die Trocknung und/oder die Aufschlussreaktion in der Reaktionskammer (101) zumindest teilweise anhand von der auf den Wärmeträger übertragenen thermischen Energie bewirkt wird.

8. Verfahren (200) gemäß einem der vorhergehenden Ansprüche, wobei das Verfahren (200) umfasst, Betreiben von ein oder mehreren Brennern (110) in dem Reaktionsraum (101) des Reaktors (100), um die Aufschlussreaktion des Gemisches aus phosphathaltigem Rohstoff (131) und Reaktionsmittel zu initiieren und/oder zu unterstützen.

9. Verfahren (200) gemäß einem der vorhergehenden Ansprüche, wobei
- der phosphathaltige Rohstoff (131) oder das Gemisch aus phosphathaltigem Rohstoff (131) und Reaktionsmittel dem Reaktionsraum (101) des Reaktors (100) über zumindest einen Zuteiler (107), insbesondere über einen Mehrfachklappenbeschicker, zugeführt wird; und
- das Gemisch aus phosphathaltigem Rohstoff (131) und Reaktionsmittel anhand der Reihe von Förderelementen (102) von dem Zuteiler (107) entlang der Reaktionsstrecke innerhalb der Reaktionskammer (101) zu dem Austrag (108) der Reaktionskammer (101) transportiert wird.

10. Verfahren (200) gemäß einem der vorhergehenden Ansprüche, wobei das Verfahren (200) umfasst, Zuführen von Reaktionsmittel separat von dem phosphathaltigen Rohstoff (131) in den Reaktionsraum (101) des Reaktors (100).

11. Verfahren (200) gemäß einem der vorhergehenden Ansprüche, wobei das Verfahren (200) umfasst, Vermischen des phosphathaltigen Rohstoffs (101) und des Reaktionsmittels anhand der Reihe von Förderelementen (102).

12. Verfahren (200) gemäß einem der vorhergehenden Ansprüche, wobei das Verfahren (200) umfasst,
- Bewirken der Trocknung des phosphathaltigen Rohstoffs (131) in einem ersten Abschnitt der Reaktionsstrecke; und
- Bewirken der Aufschlussreaktion des phosphathaltigen Rohstoffs (131) in einem nachfolgenden zweiten Abschnitt der Reaktionsstrecke.

13. Verfahren (200) gemäß einem der vorhergehenden Ansprüche, wobei das Verfahren (200) umfasst, Kühlen des Düngemittels (131) an dem Austrag (108) der Reaktionskammer (101), insbesondere mittels eines Wärmetauschers.

14. Verfahren (200) gemäß einem der vorhergehenden Ansprüche, wobei
- die Reihe von Förderelementen (102) einen ersten Drehmitnehmer (102) und einen entlang der Reaktionstrecke darauffolgenden zweiten Drehmitnehmer (102) umfasst; und
- das Verfahren (200) umfasst, Steuern des ersten Drehmitnehmers (102) und des zweiten Drehmitnehmers (102), insbesondere in Bezug auf eine Drehgeschwindigkeit und/oder in Bezug auf eine Drehrichtung, zumindest teilweise unterschiedlich und/oder unabhängig voneinander.

15. Verfahren (200) gemäß einem der vorhergehenden Ansprüche, wobei das Reaktionsmittel ein Salz, insbesondere ein Natriumsatz, Natriumcarbonat, Natriumhydrogencarbonat, Trona und/oder Carbonatit-Lava umfasst.
